# EUROPEAN PATENT APPLICATION

(11) **EP 3 248 725 A1**
(43) Date of publication of application: **29.11.2017**
(21) Application number: 17167226.4
(22) Date of filing: 20.04.2017
(51) Int. Cl.: B23K 26/00, B23K 26/03, C21D 10/00, G21C 19/20, B23K 26/146, B23K 101/12

(54) **LASER PEENING APPARATUS AND LASER PEENING METHOD**

(30) Priority: 24.05.2016 JP 2016103105
(71) Applicant: Kabushiki Kaisha Toshiba, Minato-ku Tokyo 105-8001 (JP)
(72) Inventor: URAGUCHI, Kohei, Tokyo, 105-8001 (JP); MAEHARA, Takeshi, Tokyo, 105-8001 (JP); YAMAGUCHI, Osamu, Tokyo, 105-8001 (JP); YODA, Masaki, Tokyo, 105-8001 (JP); CHIDA, Itaru, Tokyo, 105-8001 (JP)
(74) Representative: Henkel, Breuer & Partner

(57) **Abstract**

In one embodiment, a laser peening apparatus includes an output unit (41) configured to output laser light (6); a light-guide unit (31) configured to guide the outputted laser light (6); a condenser lens (42) configured to condense the guided laser light (6) ; an irradiation nozzle (32) configured to radiate the condensed laser light (6) ; a focus-change unit (50) configured to change a focal position of the laser light (6) based on distance from an irradiation target (4, 5) of the laser light (6) to the irradiation nozzle (32); and a control unit (66) configured to apply laser peening by radiating the laser light (6) toward the irradiation target (4, 5) which is in contact with water.

## Description

### CROSS-REFERENCE TO RELATED APPLICATION

This application claims the benefit of priority of Japanese Patent Application No. 2016-103105, filed on May 24, 2016, the entire contents of which are incorporated herein by reference.

### FIELD

Embodiments described herein relate generally to laser peening technology in which compressive residual stress is applied to a metal material through a plasma shock wave generated by radiating laser light onto a surface of the metal material in contact with water.

### BACKGROUND

Conventionally, there is known a laser peening apparatus configured to radiate laser light onto a surface of an underwater metal material so as to apply compressive residual stress to this metal material through a shock wave, which is generated by water in contact with the surface of this metal material when this water is instantaneously transformed into plasma. Such a laser peening apparatus is used for maintenance of structures provided at a furnace bottom of a reactor pressure vessel inside a nuclear reactor.

As to the above-described technology, since a range in which an effect of laser peening can be obtained is limited to a definite range from an irradiation head, it is required to keep appropriate distance between an irradiation head and a structure inside a nuclear reactor. However, in narrow space where in-core structures such as a furnace bottom of a reactor pressure vessel are close-packed, a laser peening apparatus may interfere with other in-core structures when a position of its irradiation head is moved in order to irradiate one in-core structure with laser light, which causes a problem that laser peening cannot be appropriately performed and/or much time is taken for positioning of the irradiation head.
[Patent Document 1] Japanese Unexamined Patent Application Publication No. 2005-227218
[Patent Document 2] Japanese Unexamined Patent Application Publication No. 2008-216012

### BRIEF DESCRIPTION OF THE DRAWINGS

Fig. 1 is a general cross-sectional view of a reactor pressure vessel on which a laser peening apparatus of one embodiment is to be installed;
Fig. 2 is a cross-sectional view illustrating the laser peening apparatus of one embodiment;
Fig. 3 is a cross-sectional view illustrating an irradiation head of the laser peening apparatus;
Fig. 4 is a side view illustrating an instrumentation tube while laser peening is being applied;
Fig. 5 is a side view illustrating an instrumentation tube while laser peening is being applied;
Fig. 6 is a block diagram illustrating each laser peening apparatus and its peripheral components;
Fig. 7 is a flowchart illustrating focal-position adjustment processing; and
Fig. 8 is a flowchart illustrating a method of installing laser peening apparatuses.

### DETAILED DESCRIPTION

In one embodiment, a laser peening apparatus includes an output unit configured to output laser light; a light-guide unit configured to guide the outputted laser light; a condenser lens configured to condense the guided laser light; an irradiation nozzle configured to radiate the condensed laser light; a focus-change unit configured to change a focal position of the laser light based on distance from an irradiation target of the laser light to the irradiation nozzle; and a control unit configured to apply laser peening by radiating the laser light toward the irradiation target which is in contact with water.

In another embodiment, a laser peening method includes steps of outputting laser light; guiding the outputted laser light; condensing the guided laser light; radiating the condensed laser light from an irradiation nozzle; changing a focal position of the laser light based on distance from an irradiation target of the laser light to the irradiation nozzle; and applying laser peening by radiating the laser light toward the irradiation target which is in contact with water.

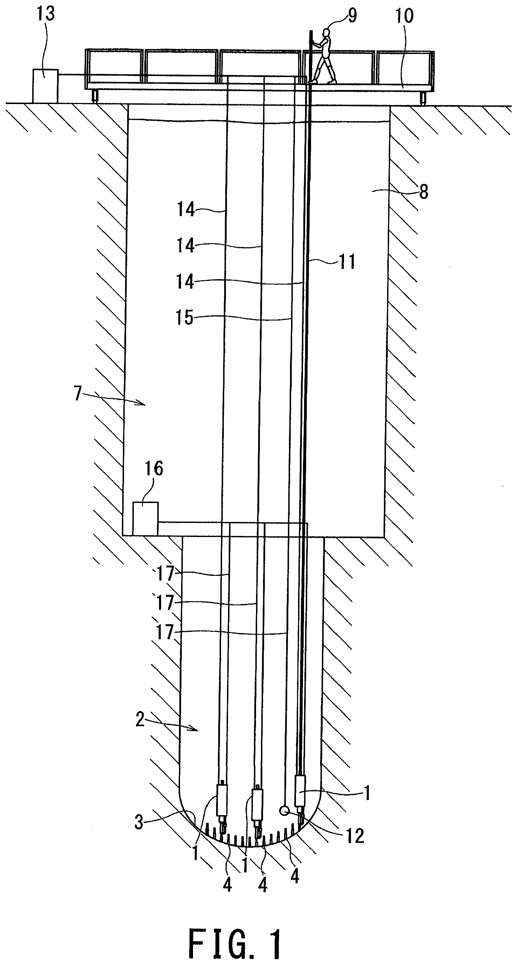

Hereinafter, the present embodiment will be described with reference to the accompanying drawings. The reference sign 1 in Fig. 1 indicates the laser peening apparatus of the present embodiment. This laser peening apparatus 1 is an apparatus configured to apply laser peening for maintenance of structures inside a reactor pressure vessel 2 of an nuclear reactor.

Laser peening is technology to apply compressive residual stress to a metal material through a plasma shock wave generated by radiating laser light onto a surface of this metal material in contact with water. Strength of a metal material is improved by being subjected to such laser peening.

Specifically, when pulse laser light of large energy is radiated onto a surface of a metal material, plasma of atoms constituting this metal material is instantaneously generated. Under a condition where water exists around plasma, expansion of the plasma is prevented, and thus, a shock wave is caused by reactive force of the plasma. This pressure is several ten thousand atmospheres. This shock wave propagates through the metal material so as to apply compressive residual stress to the metal material. This compressive residual stress applied to the metal material has an effect of preventing a stress corrosion crack and/or a fatigue crack of the metal material. In other words, laser peening technology can change tensile residual stress, which may cause a stress corrosion crack, into compressive residual stress.

Additionally, in the present embodiment, laser peening is applied on stainless steel constituting various structures of the reactor pressure vessel 2. Note that laser peening may be applied to other material excluding stainless steel. For instance, laser peening may be applied to various types of alloy such as nickel base alloy, titanium alloy, aluminum alloy, and low-alloy steel. Further, in the present embodiment, laser peening is applied to welded parts of various structures of the reactor pressure vessel 2 in order to enhance strength of those welded parts. Note that targets of laser peening are not limited to welded parts. Laser peening may be applied to other parts excluding welded parts.

In the present embodiment, the laser peening apparatus 1 is used for maintenance of the reactor pressure vessel 2 of a boiling water reactor (BWR) which is an example of an atomic power plant. The reactor pressure vessel 2 is a container configured to maintain internal pressure in a state of housing non-illustrated fuel assembly which constitutes the reactor core. Additionally, the reactor pressure vessel 2 houses in-core structures (not shown) such as a core shroud surrounding fuel assembly, a core support member for supporting fuel assembly, a water flow pump for generating water flow inside the reactor pressure vessel 2. Further, the lower part of the reactor pressure vessel 2 is bent into the shape of a hemisphere and formed as a furnace bottom 3. This furnace bottom 3 is provided with components such as a control-rod guide tube configured to guide a control rod, which controls chain reaction of nuclear fuel, and a control-rod driving mechanism configured to drive the control rod.

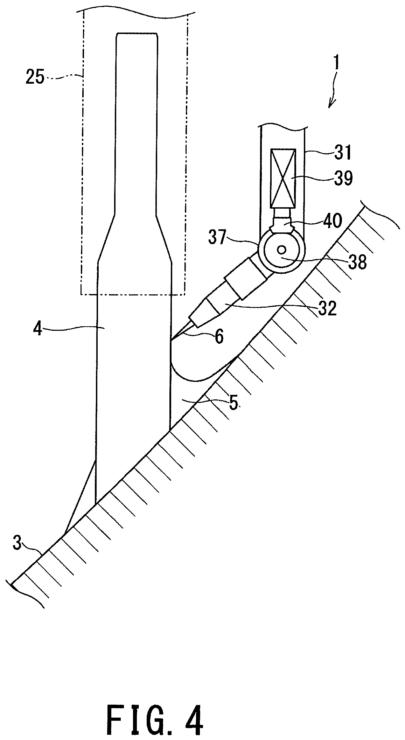

As shown in Fig. 1, the furnace bottom 3 of the reactor pressure vessel 2 is provided with instrumentation tubes 4 (in-core monitor housings) for maintaining non-illustrated in-core instrumentation devices. Additionally, plural instrumentation tubes 4 are provided on the furnace bottom 3. These instrumentation tubes 4 are tubular structures which vertically extends from the furnace bottom 3. Each in-core instrumentation device is a device configured to measure various parameters such as neutron rays emitted from fuel assembly. Additionally, at the time of manufacturing the reactor pressure vessel 2, the instrumentation tubes 4 are inserted into through-holes formed on the furnace bottom 3. Then, peripherals of the instrumentation tubes 4 are welded, and thereby the instrumentation tubes 4 and the reactor pressure vessel 2 are formed into one structure. In the present embodiment, the welded part 5 around the instrumentation tubes 4 is an irradiation target of the laser light 6 as shown in Fig. 4.

In the present embodiment, laser peening is applied by irradiating the welded part 5 (Fig. 4) around the instrumentation tubes 4 with the laser light 6. Incidentally, structures such as a non-illustrated housing for supporting a control-rod driving mechanism are provided on the furnace bottom 3. Since these many in-core structures are close-packed on the furnace bottom 3, the furnace bottom 3 is narrow space which is not necessarily large enough to dispose each laser peening apparatus 1.

Prior to application of laser peening, a non-illustrated cover of the upper part of the reactor pressure vessel 2 is dismounted. Additionally, fuel assembly is taken out from the inside of the reactor pressure vessel 2, and is moved into a nuclear fuel pool. Further, other in-core structures are also taken out from the inside of the reactor pressure vessel 2. Note that laser peening is applied under a state where the inside of the reactor pressure vessel 2 and the upper part of the reactor container 7 are filled with water 8. Additionally, a working bridge 10 is provided above the reactor pressure vessel 2 such that an operator 9 can work on the working bridge 10. In Fig. 1, some components are omitted for avoiding complication of the drawing.

When laser peening is applied, the operator 9 lowers the laser peening apparatus 1 from the working bridge 10 to the furnace bottom 3 by using the operation pole 11. Specifically, this operation pole 11 can be divided into plural parts in its longitudinal direction. Thus, the operator 9 lowers the laser peening apparatus 1 to the furnace bottom 3 while connecting the divided parts of the operation pole 11 with each other. By using such an operation pole 11, the laser peening apparatus 1 can be installed on a position being deep in water depth.

Additionally, an underwater monitoring camera 12 is also sunk in water for monitoring an installation state of the laser peening apparatus 1. This underwater monitoring camera 12 may be an underwater robot which can move or swim in water. Further, in the present embodiment, maintenance work is performed by using three laser peening apparatuses 1. Those three laser peening apparatuses 1 used in the present embodiment are the same as each other in terms of configuration. Note that maintenance work may be performed by using four or more laser peening apparatus 1 or may be performed by using only one laser peening apparatus 1.

Moreover, ground support equipment 13 is installed near the working bridge 10 for controlling the laser peening apparatuses 1. The ground support equipment 13 is connected to the respective laser peening apparatuses 1 via the main cables 14. The ground support equipment 13 is also connected to the underwater monitoring camera 12 via the camera cable 15.

Further, a water flow pump 16 is installed under water in the vicinity of the reactor pressure vessel 2 in order to generate a jet flow used at the time of application of laser peening. This water flow pump 16 is connected to the respective laser peening apparatuses 1 via the water supply hoses 17.

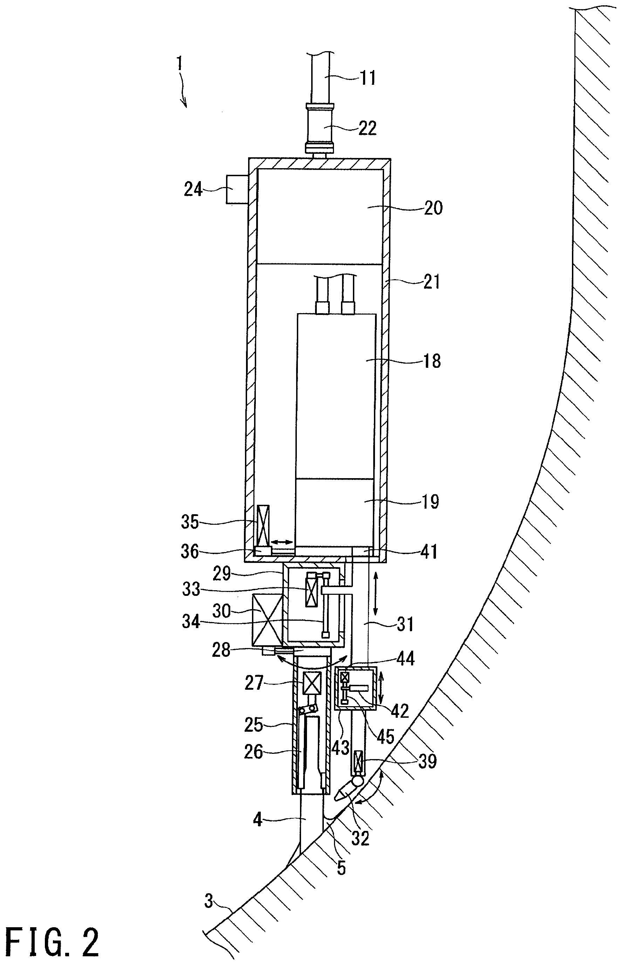

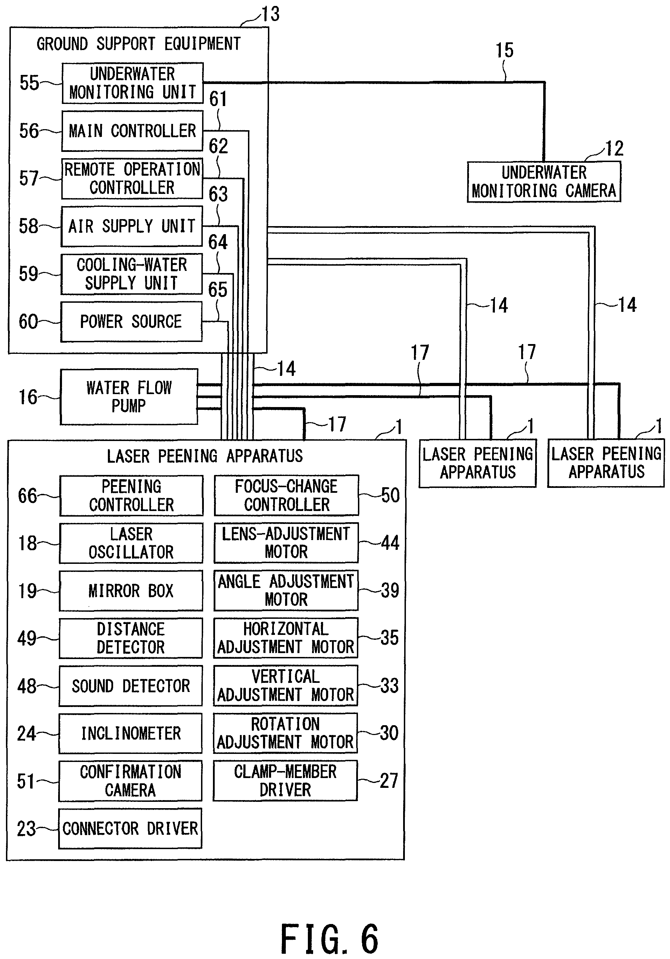

As shown in Fig. 2, each laser peening apparatuses 1 includes a laser oscillator 18 configured to output the laser light 6, a mirror box 19 configured to control width and power of the laser light 6 outputted from this laser oscillator 18, a float chamber 20 configured to give buoyance to the laser peening apparatus 1, and a housing 21 configured to house those components. Additionally, the upper end of the housing 21 is provided with a connector 22 which is connected with the operation pole 11. Incidentally, the connector 22 is equipped with a mechanism whereby the connector 22 can be connected to and separated from the operation pole 11, and each laser peening apparatus 1 includes a connector driver 23 (Fig. 6) for driving this connector 22. Further, an inclinometer 24 for measuring an inclination of the housing 21 is provided on a side surface of the housing 21.

In the present embodiment, the laser oscillator 18 generates a YAG laser. This YAG laser is a laser outputted by using a crystal of yttrium aluminum garnet. Additionally, a pulse width of the laser light 6 is controlled so as to become 10 nanoseconds (i.e., one hundred millionth of a second) or below in order to suppress influence of heat of plasma caused by the laser light 6.

Further, the lower end of each of the laser peening apparatuses 1 is provided with the coupler 25 which is connected to the upper part of one of the instrumentation tubes 4. This coupler 25 is a tubular structure and is open on the lower side. Additionally, the coupler 25 is interdigitated with the instrumentation tube 4 from above. Further, the coupler 25 includes a clamp member 26 configured to clamp the instrumentation tube 4 and a clamp-member driver 27 (Fig. 6) for driving this clamp member 26. In the present embodiment, when the instrumentation tube 4 is clamped by the clamp member 26 under a state where the instrumentation tube 4 is interdigitated with the coupler 25, the coupler 25 is connected (i.e. , linked) to the instrumentation tube 4. Incidentally, the operator 9 performs this installation work while confirming a state of the laser peening apparatus 1 with the underwater monitoring camera 12.

In the present embodiment, each laser peening apparatus 1 is supported in a state where the instrumentation tube 4 is connected to the coupler 25. In this state, the operation pole 11 can be separated from the connector 22. Since buoyancy is given to each laser peening apparatus 1 by the float chamber 20, each laser peening apparatus 1 can be fixed to the instrumentation tube 4 without imposing a burden on the instrumentation tube 4.

In the present embodiment, the operator 9 installs the laser peening apparatuses 1 on the respective instrumentation tubes 4 while confirming an inclination of each laser peening apparatus 1 with the inclinometer 24. Since the operator 9 performs installation work of the laser peening apparatuses 1 with the operation pole 11 while confirming the inclinometer 24, each of the laser peening apparatuses 1 can be installed under a state where attitude of each of the laser peening apparatuses 1 is appropriately kept. Additionally, when any of the laser peening apparatuses 1 is not appropriately installed, the operator 9 can perform the installation work of the inappropriately installed laser peening apparatus 1 again.

Incidentally, when each of the laser peening apparatuses 1 is fixed to one of the instrumentation tubes 4, an inclination state of each instrumentation tube 4 is reflected on the inclinometer 24. When the laser peening apparatus 1 is precisely fixed to the instrumentation tube 4 but the inclinometer 24 indicates any inclination (i.e., the inclinometer 24 detects that at least one laser peening apparatus 1 is inclined from the reference direction such as the vertical direction), it means that the instrumentation tube 4 is inclined from the reference direction. When the detected inclination of this instrumentation tube 4 is out of a predetermined allowable range, application of laser peening may be stopped. Since the inclination of each of the instrumentation tubes 4 can be measured by using the inclinometer 24 as described above, the operator 9 can determine whether laser peening can be appropriately applied or not.

Additionally, a rotator 28 capable of rotating in the horizontal direction is provided on the upper part of the coupler 25 as shown in Fig. 2. Further, a supporting member 29 configured to support the housing 21 is provided above the rotator 28. A rotation adjustment motor 30 is provided at a position lateral to this supporting member 29. The rotator 28 is rotated by driving this rotation adjustment motor 30. The above-described components such as the housing 21 are supported by the rotator 28 via the supporting member 29, and can rotate in the horizontal direction together with the rotator 28.

Further, each of the laser peening apparatuses 1 includes a light guide pipe 31 configured to guide the laser light 6 from the mirror box 19. This light guide pipe 31 is a tubular member configured to guide the laser light 6 in a state of parallel light. Additionally, the light guide pipe 31 extends downward from the bottom part of the housing 21. The lower end of this light guide pipe 31 is provided with an irradiation nozzle 32 for radiating the laser light 6 in a desired or predetermined direction. This irradiation nozzle 32 is disposed near the lateral side of the coupler 25.

When the housing 21 is rotated by driving the rotation adjustment motor 30, the irradiation nozzle 32 rotates about the coupler 25 as the central axis. In other words, the irradiation nozzle 32 can be disposed to any position of the circumference of the instrumentation tube 4 connected with the coupler 25.

Additionally, the light guide pipe 31 can move in the longitudinal direction (i.e., upward and downward). Further, a vertical adjustment motor 33 for moving the light guide pipe 31 in the longitudinal direction is housed inside the supporting member 29. This vertical adjustment motor 33 is connected to the light guide pipe 31 via a driving mechanism 34 such as a ball spline composed of a spline shaft and an external cylinder. Moreover, the irradiation nozzle 32 can be moved in the longitudinal direction by operating the light guide pipe 31. In other words, a vertical position of the irradiation nozzle 32 can be changed by driving the vertical adjustment motor 33, and the irradiation nozzle 32 can be moved along the instrumentation tube 4 which extends in the vertical direction.

Additionally, the above-described laser oscillator 18 and the mirror box 19 can move laterally (i.e., in the horizontal direction) inside the housing 21. Further, the light guide pipe 31 connected with the mirror box 19 can move laterally (i.e., in the horizontal direction) together with the mirror box 19. Note that a horizontal adjustment motor 35 is further provided for laterally moving components such as the mirror box 19 and is housed inside the housing 21. This horizontal adjustment motor 35 is connected with the mirror box 19 via a driving structure 36 such as a ball spline. Furthermore, the irradiation nozzle 32 can be moved laterally (i.e., in the radial direction of the instrumentation tube 4) by operating the light guide pipe 31. In other words, distance between the irradiation nozzle 32 and the instrumentation tube 4 can be changed by driving the horizontal adjustment motor 35, and the irradiation nozzle 32 can be brought close to or away from the instrumentation tube 4.

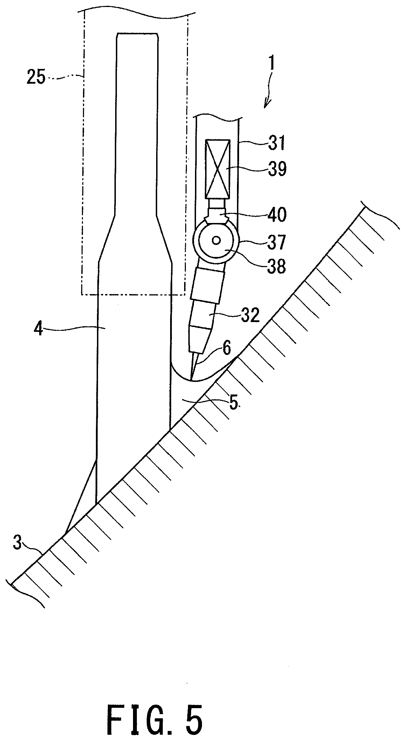

As shown in Fig. 4 and Fig. 5, the irradiation nozzle 32 is connected with the light guide pipe 31 via a joint 37. Additionally, a bevel gear 38 is provided on this joint 37. This bevel gear 38 disposed so as to mesh with a shaft gear 40 of an angle adjustment motor 39. In other words, an inclination angle of the irradiation nozzle 32 can be changed by driving the angle adjustment motor 39. In particular, even when the instrumentation tube 4 is installed on an inclined part such as the furnace bottom 3 of the reactor pressure vessel 2, the irradiation nozzle 32 can be moved at an appropriate angle in accordance with this inclination.

For instance, when laser peening is applied to a side surface of the instrumentation tube 4 fixed to a steep side of the bowl-shaped inner surface of the furnace bottom 3 of the reactor pressure vessel 2 as shown in Fig. 4, the inclination of the irradiation nozzle 32 can be brought close to a horizontal state. Contrastively, when laser peening is applied to a border part between the instrumentation tube 4 and the reactor pressure vessel 2 as shown in Fig. 5, the inclination of the irradiation nozzle 32 can be brought close to a vertical state.

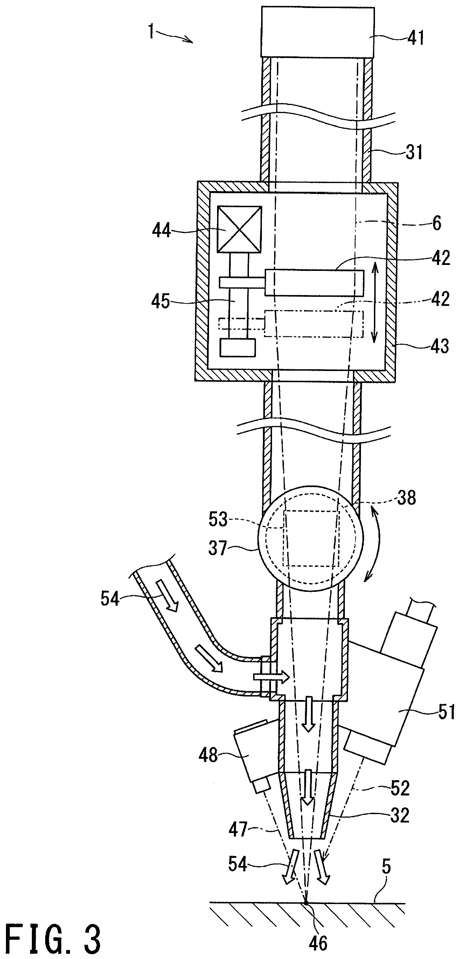

As shown in Fig. 3, the laser light 6 is outputted from an output port (i.e., laser outlet) 41 of the mirror box 19, and is guided to the irradiation nozzle 32 through a cavity inside the light guide pipe 31. On this optical path, a condenser lens 42 configured to condense the laser light 6 is provided. This condenser lens 42 is housed inside a lens case 43 which is provided on the light guide pipe 31.

Additionally, the condenser lens 42 can move in the longitudinal direction (i.e., up-and-down direction). A lens-adjustment motor 44 for moving the condenser lens 42 in the longitudinal direction is housed inside the lens case 43. This lens-adjustment motor 44 is connected with the condenser lens 42 via a driving mechanism 45 such as a ball spline. In other words, it is possible to change optical distance from the welded part 5 (irradiation target) around the instrumentation tube 4 to the condenser lens 42 by driving the lens-adjustment motor 44. Thus, a focal position 46 (irradiation point) of the laser light 6 can be changed. In the present embodiment, the lens-adjustment motor 44 functions as a movement control unit configured to move the condenser lens 42.

When the laser light 6 is radiated onto a metal material such as the welded part 5 around the instrumentation tube 4, the surface of this metal material fluctuates (vibrates) so as to generate an ultrasonic wave 47. In order to detect the ultrasonic wave 47 generated at the above timing, a sound detector 48 is provided on the side of the irradiation nozzle 32. Additionally, the laser peening apparatus 1 includes a distance detector 49 (Fig. 6) configured to measure distance from a metal material (irradiation target) to the irradiation nozzle 32 on the basis of the ultrasonic wave 47 detected by the sound detector 48. The laser peening apparatus 1 further includes a focus-change controller 50 (Fig. 6) configured to control and change optical distance from the welded part 5 (irradiation target) to the condenser lens 42 on the basis of the distance measured by the distance detector 49.

Note that a confirmation camera 51 is provided on the side of the irradiation nozzle 32. An imaging direction 52 of this confirmation camera 51 is oriented to the direction in which the laser light 6 is radiated. Since a surface of a metal material subjected to laser peening change in color, a state of a metal material after application of laser peening can be confirmed by visually checking this color change with the confirmation camera 51 or measuring this color change from brilliance detected by the confirmation camera 51. In other words, it is possible to confirm whether or not laser peening has been successfully applied to a necessary range.

Additionally, a prism device 53 is provided inside the joint 37. This prism device 53 is configured to guide the laser light 6 in accordance with an inclination angle of the irradiation nozzle 32. This prism device 53 is configured to guide the laser light 6 toward the tip of the irradiation nozzle 32 no matter in which direction the irradiation nozzle 32 is caused to fluctuate around the joint 37. Incidentally, the inside of the light guide pipe 31 is sealed with the prism device 53 such that water does not penetrate above the prism device 53.

Additionally, water supply hoses 17 extending from the water flow pump 16 (Fig. 1) are connected with the respective irradiation nozzles 32 of the laser peening apparatuses 1. Water flow 54 is guided into inside of each of the irradiation nozzles 32 by way of each of the water supply hoses 17, and each laser peening apparatus 1 is configured such that the water flow 54 spews from the tip of the irradiation nozzle 32 together with the laser light 6. As described above, a jet flow is generated when laser peening is applied. Incidentally, when the laser light 6 is radiated onto a metal material, fine bubbles and a clad (i.e., separation film) are generated from the irradiation area. Since bubbles and a clad generated on the irradiation area of the laser light 6 can be washed away by the water flow 54 (jet flow) in the present embodiment, laser peening can be appropriately applied under satisfactory conditions.

Next, the system configuration of each laser peening apparatus 1 will be described with reference to the block diagram of Fig. 6. As shown in Fig. 6, the ground support equipment 13 of the present embodiment includes an underwater monitoring unit 55, a main controller 56, a remote operation controller 57, an air supply unit (drier) 58, a cooling-water supply unit 59, and a power source 60. The underwater monitoring unit 55 controls the underwater monitoring camera 12. The main controller 56 controls the laser peening apparatus 1. The remote operation controller 57 remotely controls connection of the connector 22 of the laser peening apparatus 1 with the operation pole 11 and separation of the connector 22 from the operation pole 11, automatically or in accordance with an instruction inputted by the operator 9. The air supply unit 58 supplies the laser oscillator 18 with air of high cleanliness. The cooling-water supply unit 59 supplies cooling water for keeping the laser oscillator 18 equal to or below a predetermined temperature. The power source 60 supplies the laser peening apparatus 1 with electric power. Incidentally, the ground support equipment 13 may further includes other devices excluding the above-described components.

In the ground support equipment 13, the underwater monitoring unit 55 is connected with the underwater monitoring camera 12 via the camera cable 15. Additionally, the main controller 56 is connected with each laser peening apparatus 1 via a control signal line 61. In addition, the remote operation controller 57 is connected with each laser peening apparatus 1 via a remote-operation signal line 62. Moreover, the air supply unit 58 is connected with each laser peening apparatus 1 via an air supply hose 63. Further, the cooling-water supply unit 59 is connected with each laser peening apparatus 1 via a cooling-water supply hose 64. Furthermore, the power source 60 is connected with each laser peening apparatus 1 via a power supply line 65.

Note that each of the main cables 14 is a set or bundle of five components including the control signal line 61, the remote-operation signal line 62, the air supply hose 63, the cooling-water supply hose 64, and the power supply line 65. In other words, the three main cables 14 connect the respective laser peening apparatuses 1 with the ground support equipment 13.

Additionally, the water flow pump 16 is connected with the respective laser peening apparatuses 1 via three water supply hoses 17. Each of the water supply hoses 17 is connected with the irradiation nozzle 32 (Fig. 3) of each laser peening apparatus 1. Incidentally, the water flow pump 16 includes a suction port configured to suck up water, a pump unit for sucking up water, and a filter configured to purify the water sucked up from suction port (not shown).

Each of the laser peening apparatuses 1 of the present embodiment includes a peening controller 66 configured to apply laser peening, the laser oscillator 18, the mirror box 19, the distance detector 49, the sound detector 48, the inclinometer 24, the confirmation camera 51, the connector driver 23, the focus-change controller 50, the lens-adjustment motor 44, the angle adjustment motor 39, the horizontal adjustment motor 35, the vertical adjustment motor 33, the rotation adjustment motor 30, and the clamp-member driver 27.

Additionally, each of the laser peening apparatuses 1 applies laser peening by driving the above-described various types of motors so as to appropriately change a position and an angle of the irradiation nozzle 32 in accordance with shape of the welded part 5 around each instrumentation tube 4. Further, a position of the irradiation nozzle 32 is controlled in such a manner that the water flow 54 jetted from this irradiation nozzle 32 sufficiently reaches the welded part 5.

Each of the main controller 56 and the peening controller 66 of the present embodiment includes hardware such as a processor and a memory, and is configured as a computer in which information processing by software is concretely realized by hardware. Incidentally, the peening controller 66 is configured as a communication unit for performing data communication with the main controller 56 of the ground support equipment 13.

Note that the ground support equipment 13 constitutes a part of each of the laser peening apparatuses 1 of the present embodiment. Additionally, though the peening controller 66, the focus-change controller 50, and the distance detector 49 are disposed in each of the laser peening apparatuses 1 in the present embodiment, those three components 66, 50, 49 may be disposed in the ground support equipment 13. In other words, the entire control of each of the laser peening apparatuses 1 may be performed by the ground support equipment 13.

Incidentally, the operator 9 installs one of the laser peening apparatuses 1 on one of the instrumentation tubes 4 by using the operation pole 11, and then separates the operation pole 11 from this laser peening apparatus 1. Additionally, separation work of the operation pole 11 can be performed by using the remote operation controller 57 of the ground support equipment 13. Then, the operator 9 instructs start of laser peening by using the main controller 56 of the ground support equipment 13. As soon as the start instruction is outputted, this laser peening apparatus 1 starts application of laser peening. Additionally, each laser peening apparatus 1 can autonomously apply laser peening in accordance with previously or preliminarily determined procedures. Further, the peening controller 66 of each laser peening apparatus 1 previously stores control programs and database which are necessary for laser peening.

As soon as one laser peening apparatuses 1 starts application of laser peening, the operator 9 connects the operation pole 11 with another (i.e., newly selected) laser peening apparatus 1. Additionally, connection work of the operation pole 11 can be performed by using the remote operation controller 57 of the ground support equipment 13. Then, the operator 9 can install the newly selected laser peening apparatus 1 on another of the instrumentation tubes 4.

In this manner, the operator 9 can perform work of sequentially installing one laser peening apparatus 1 on one instrumentation tube 4 by appropriately performing connection and separation of the operation pole 11 while another laser peening apparatus 1 having been installed on another instrumentation tube 4 is automatically applying laser peening. Thus, in the present embodiment, work efficiency can be improved.

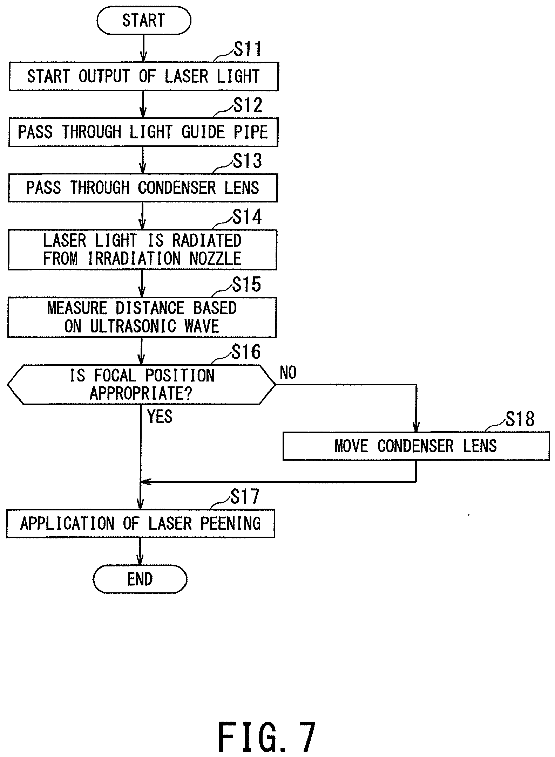

Next, focal position adjustment processing performed by the peening controller 66 of each laser peening apparatus 1 will be described with reference to the flowchart of Fig. 7.

As shown in Fig. 7, in the output step S11, the peening controller 66 orients the irradiation nozzle 32 to the welded part 5 around the instrumentation tube 4, and starts oscillation of the laser oscillator 18 for outputting the laser light 6 (Fig. 3). Note that the instrumentation tube 4 and the welded part 5 are the irradiation targets. This laser light 6 is outputted from the output port 41 of the mirror box 19.

Next, in the light-guide step S12, the laser light 6 outputted from the output port 41 of the mirror box 19 passes through the light guide pipe 31, and is guided to the condenser lens 42.

Next, in the light-focus step S13, the laser light 6 guided by the light guide pipe 31 passes through the condenser lens 42, and is condensed by the condenser lens 42.

Next, in the irradiation step S 14, this condensed laser light 6 is radiated from the irradiation nozzle 32 toward the welded part 5. Additionally, when the laser light 6 is radiated onto a metal material such as the welded part 5, the surface of the welded part 5 fluctuates (vibrates) so as to generate the ultrasonic wave 47 (Fig. 3).

In the measurement step S15, the sound detector 48 detects this ultrasonic wave 47, and the distance detector 49 measures the distance from the welded part 5 to the irradiation nozzle 32 on the basis of the ultrasonic wave 47 detected by the sound detector 48.

Next, in the focal-point determination step S16, the peening controller 66 determines whether the focal position 46 of the laser light 6 condensed by the condenser lens 42 is appropriate or not, on the basis of the distance from the welded part 5 to the irradiation nozzle 32 acquired from the distance detector 49.

When the focal position 46 of the laser light 6 is determined to be appropriate, the processing proceeds to the execution step S17 in which laser peening is applied, and then the focal position adjustment processing is completed.

Conversely, when the focal position 46 of the laser light 6 is determined to be inappropriate, the processing proceeds to the focal-position change step S18 in which the focus-change controller 50 moves the condenser lens 42 to an appropriate position by driving the lens-adjustment motor 44 so as to appropriately adjust the focal position 46 of the laser light 6. Then, the focal-position adjustment processing is completed, and the processing proceeds to the execution step S17 in which laser peening is applied.

Incidentally, each time the peening controller 66 changes the irradiation point with respect to the welded part 5 around the instrumentation tube 4, the peening controller 66 performs the focal-position adjustment processing so as to adjust the focal position 46 of the laser light 6 to an appropriate position. Additionally, since the irradiation nozzle 32 is rotated about the instrumentation tube 4 (as the rotational axis) in the horizontal direction, laser peening can be applied over the entire region of the welded part 5 around the instrumentation tube 4. Although the distance from the irradiation nozzle 32 to the welded part 5 is sometimes changed when an inclination of the irradiation nozzle 32 is changed, laser peening can be appropriately applied without changing the distance from the irradiation nozzle 32 to the welded part 5 because the focal position 46 can be changed by moving the condenser lens 42. In other words, when at least one laser peening apparatus 1 is disposed in narrow space, laser peening can be appropriately applied also by properly changing the position of the irradiation nozzle 32 in accordance with surrounding conditions.

When the laser light 6 is radiated onto the peripheral (i. e. , cylindrical) surface of the instrumentation tube 4, laser peening can be applied over the entire range of the cylindrical surface of the instrumentation tube 4 without changing the distance from the instrumentation tube 4 to the irradiation nozzle 32, by keeping an inclination angle of the irradiation nozzle 32 constant and rotating the irradiation nozzle 32 about the instrumentation tube 4.

Although the focal-position adjustment processing is controlled and directly performed by the peening controller 66 of each laser peening apparatus 1 in the present embodiment, the focal-position adjustment processing may be controlled by the main controller 56 of the ground support equipment 13.

Note that the focus-change controller 50 of the present embodiment preliminarily stores focal-position determination table data in which each distance value from the welded part 5 to the irradiation nozzle 32 and the focal position 46 optimum for this distance are associated with each other. Accordingly, when the peening controller 66 determines whether the focal position 46 of the laser light 6 condensed by the condenser lens 42 is appropriate or not on the basis of the distance from the welded part 5 to the irradiation nozzle 32, the peening controller 66 refers to the focal-position determination table data. In this determination as to whether the focal position 46 is within an appropriate range or not, the peening controller 66 refers to a predetermined reference value. Additionally, the peening controller 66 may determine appropriateness of other factors such as an irradiation range of the laser light 6 and an irradiation angle between the laser light 6 and the surface of the welded part 5. When at least one factor is determined to be inappropriate, the peening controller 66 changes the factor determined as inappropriate into an appropriate value or condition.

Although it is ideal to perpendicularly radiate laser light onto a surface of an irradiation target at the time of applying laser peening, it is often difficult to radiate the laser light 6 at an ideal irradiation angle in narrow space such as the furnace bottom 3 of the reactor pressure vessel 2. Additionally, since obliquely radiated laser light 6 forms an elliptical irradiation range on a surface of an irradiation target, this irradiation area of the laser light 6 becomes larger than a case of perpendicularly radiating the laser light 6 onto the same irradiation target. In other words, a spot diameter of the laser light 6 becomes larger. In particular, it is required to bring irradiation density of the laser light 6 on an irradiation target surface into an acceptable range as a condition of obtaining an effect of laser peening.

Since the focal position 46 of the laser light 6 can be appropriately changed in the present embodiment, irradiation density of the laser light 6 can be brought into an acceptable range. In other words, to move the condenser lens 42 by changing a focal position of the laser light 6 provides enough margin of application of laser peening, and it contributes to reduction in an application period.

Additionally, when laser peening is applied to an irradiation target with a shape which cannot be illustrated by a drawing like a welded bead, irradiation density of the laser light 6 cannot be brought into an acceptable range unless the shape of this irradiation target is accurately measured. Even in such a case, however, the distance detector 49 measures distance from the welded part 5 around the instrumentation tube 4 to the irradiation nozzle 32 on the basis of the ultrasonic wave 4 detected by the sound detector 48 in the present embodiment, and thereby this distance can be accurately acquired.

As described above, even when the welded part 5 (irradiation target) is at a position being deep in water depth like the furnace bottom 3 of the reactor pressure vessel 2, distance from the welded part 5 to the irradiation nozzle 32 can be measured on the basis of the ultrasonic wave 47 generated from the irradiation range of the laser light 6. Incidentally, an ultrasonic wave means sound which is 20000 Hz or over in vibration frequency and cannot be perceived as a steady sound by a human ear. Additionally, a sound wave within the audible range may be used for measuring the above distance.

Further, the focal position 46 can be easily changed by causing the lens-adjustment motor 44 to move a position of the condenser lens 42. Laser peening can also be applied to an irregular surface of the welded part 5 like an welded bead by determining an appropriate position of the condenser lens 42 based on the distance measured by the distance detector 49. Moreover, it is not necessary to accurately measure a shape of the welded part 5 (irradiation target) in advance of laser peening, and the optimum laser peening can be achieved by simple measurement of a shape of the welded part 5.

Furthermore, since the laser light 6 is guided in a state of parallel light (collimated light) by the light guide pipe 31 in the present embodiment, it is possible to obtain a wide variable range of the focal position 46 of the laser light 6. Incidentally, in the case of a light guide member such as an optical fiber, the laser light 6 is changed into nonparallel light and there is a possibility that a variable range of the focal position 46 of the laser light 6 is narrowed. Thus, it is appropriate to use the light guide pipe 31 for guiding the laser light 6. However, the laser light 6 may be guided by an optical fiber instead of the light guide pipe 30. In the case of using an optical fiber, it is preferable to change the laser light 6 outputted from the optical fiber into parallel light by using a collimator and condense this parallel light by using the condenser lens 42.

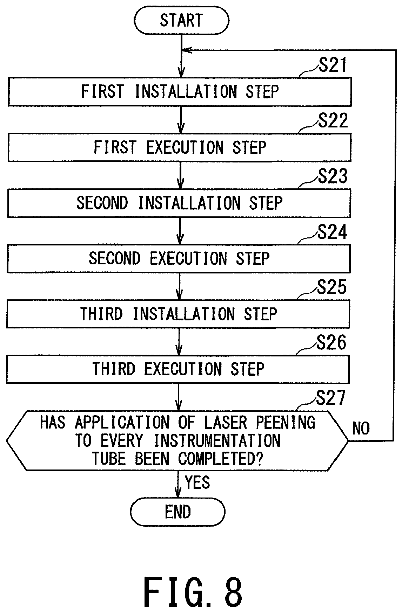

Next, an installation method of each laser peening apparatus 1 will be described with reference to Fig. 8.

As shown in Fig. 8, the operator 9 first selects one of the plural laser peening apparatuses 1 as the first laser peening apparatus 1 and selects one of the plural instrumentation tubes 4 as the first instrumentation tube 4.

Next, in the first installation step S21, the operator 9 connects the operation pole 11 with the connector 22 of the first laser peening apparatus 1, and then extends the operation pole 11 from the working bridge 10 provided above the reactor pressure vessel 2 to the furnace bottom 3 so as to install the first laser peening apparatus 1 on the first instrumentation tube 4. Afterward, the operator 9 separates the operation pole 11 from the connector 22 of the first laser peening apparatus 1 by operating the remote operation controller 57.

Next, in the first execution step S22, the first laser peening apparatus 1 applies laser peening. Note that the first laser peening apparatus 1 autonomously (or automatically) applies laser peening in accordance with previously determined procedures.

Next, in the second installation step S23, the operator 9 connects the operation pole 11 with the connector 22 of the second laser peening apparatus 1, and then extends the operation pole 11 from the working bridge 10 provided above the reactor pressure vessel 2 to the furnace bottom 3 so as to install the second laser peening apparatus 1 on the second instrumentation tube 4. Afterward, the operator 9 separates the operation pole 11 from the connector 22 of the second laser peening apparatus 1 by operating the remote operation controller 57.

Next, in the second execution step S24, the second laser peening apparatus 1 applies laser peening. Note that the second laser peening apparatus 1 autonomously (or automatically) applies laser peening in accordance with previously determined procedures.

Next, in the third installation step S25, the operator 9 connects the operation pole 11 with the connector 22 of the third laser peening apparatus 1, and then extends the operation pole 11 from the working bridge 10 provided above the reactor pressure vessel 2 to the furnace bottom 3 so as to install the third laser peening apparatus 1 on the third instrumentation tube 4. Afterward, the operator 9 separates the operation pole 11 from the connector 22 of the third laser peening apparatus 1 by operating the remote operation controller 57.

Next, in the third execution step S26, the third laser peening apparatus 1 applies laser peening. Note that the third laser peening apparatus 1 autonomously (or automatically) applies laser peening in accordance with previously determined procedures.

Next, in the determination step S27, the operator 9 determines whether application of laser peening to all the instrumentation tubes 4 has been completed or not. When application of laser peening to all the instrumentation tubes 4 has been completed, installation work of the laser peening apparatuses 1 is completed. Conversely, when there still is one or more instrumentation tube 4 which is not subjected to laser peening, the processing returns to the above-described step S21. Incidentally, this determination step (S27) may be performed between the first execution step (S22) and the second execution step (S24) in addition to after the third execution step (S26).

When the processing returns to the first installation step S21, the operator 9 waits until the first laser peening apparatus 1 completes application of laser peening to the first instrumentation tube 4. Afterward, when the first laser peening apparatus 1 completes this laser peening, the operator 9 connects the operation pole 11 with the connector 22 of the first laser peening apparatus 1, and detaches the first laser peening apparatus 1 from the first instrumentation tube 4. Then, the operator 9 reinstalls the first laser peening apparatus 1 on another instrumentation tube 4 which has not been subjected to laser peening, and the first laser peening apparatus 1 applies laser peening to this instrumentation tube 4. Similarly, when there still is an instrumentation tube 4 which is not selected as a target of laser peening, the operator 9 reinstalls the second laser peening apparatus 1 on this unfinished instrumentation tube 4 after the second laser peening apparatus 1 completes application of laser peening to the (previously-selected) second instrumentation tube 4. Similarly, when there still is an instrumentation tube 4 which is not selected as a target of laser peening, the operator 9 reinstalls the third laser peening apparatus 1 on this unfinished instrumentation tube 4 after the third laser peening apparatus 1 completes application of laser peening to the (previously-selected) third instrumentation tube 4. In this manner, respective installation procedures of the first to third laser peening apparatuses 1 are repeated in order until application of laser peening to every instrumentation tube 4 are completed.

Since installation work of one laser peening apparatus 1 on one instrumentation tube 4 can be performed while another laser peening apparatus 1 is applying laser peening on another instrumentation tube 4 in the above-describe manner, work efficiency can be improved.

Although the laser peening apparatuses 1 are used for maintenance of the reactor pressure vessel 2 of a boiling-water reactor (BWR) as an example of an atomic power plant in the present embodiment, each laser peening apparatus 1 may be used for maintenance of other types of nuclear reactors such as a pressurized-water reactor. Additionally, each laser peening apparatus 1 of the present embodiment may be applied to other technical fields aside from reactors. For instance, each laser peening apparatus 1 may be used for maintenance of structures in narrow space such as inside of a water pipe and/or a water storage tank.

Although the laser peening apparatuses 1 are used for maintenance of structures provided in water in the present embodiment, application targets of laser peening are not limited to structures provided in water. For instance, laser peening may be applied to an aboveground structure by radiating laser light onto the surface of this aboveground structure while this surface is being showered with water. Additionally, when a structure is manufactured in facility such as a fabrication plant, laser peening may be applied to this structure in order to enhance strength of this structure.

Additionally, though laser peening is applied to the welded part 5 and its surrounding instrumentation tube 4 in the present embodiment, laser peening may be applied to other components such as a housing for supporting a control-rod driving mechanism. Additionally, laser peening may be applied to connection parts between the reactor pressure vessel 2 and various types of pipes and other in-core structures.

Moreover, though distance between an irradiation target and the irradiation nozzle 32 is measured by an ultrasonic wave in the present embodiment, this distance may be measured in other methods. For instance, distance between an irradiation target and the irradiation nozzle 32 may be measured by using reflected light of the laser light 6 or a bar for physical measurement.

Further, though the focal position 46 is changed by causing the lens-adjustment motor 44 to move the condenser lens 42 in the present embodiment, the focal position 46 may be changed in another methods. For instance, each laser peening apparatus 1 may be provided with plural condenser lenses which are designed to be different in distance to the focal position 46 from each other, so that the focal position 46 is changed by switching these condenser lenses depending on distance from an irradiation target to the irradiation nozzle 32. In addition, each laser peening apparatus 1 may be provided with a prism device configured to change optical distance between the condenser lens 42 and an irradiation target. This is so that the prism device changes the focal position 46 by changing the distance between the condenser lens 42 and the irradiation target depending on the distance from the irradiation nozzle 32 to the irradiation target.

Furthermore, though the distance detector 49 measures distance from the welded part 5 around the instrumentation tube 4 to the irradiation nozzle 32 on the basis of the ultrasonic wave 47 detected by the sound detector 48 and laser peening is applied on the basis of this measurement result in the present embodiment, this distance may be measured in other methods. For instance, shape and size of the instrumentation tubes 4 and the welded part 5 are previously measured such that accurate three-dimensional data of the instrumentation tubes 4 and the welded part 5 are acquired in advance. Then, distance from the welded part 5 to the irradiation nozzle 32 may be measured on the basis of the three-dimensional data acquired in the above-manner.

According to the above-described embodiments, by providing a focus-change unit configured to change a focal position of laser light based on distance from an irradiation target of laser light to an irradiation nozzle, laser peening can be appropriately applied even in narrow space and time for applying laser peening can be reduced.

Incidentally, the output port 41 is an example of the output unit described in the claims.

The light guide pipe 31 is an example of the light guide unit described in the claims.

The focus-change controller 50 is an example of the focus-change unit described in the claims.

The peening controller 66 is an example of the control unit described in the claims.

The distance detector 49 is an example of the measurement unit described in the claims.

The lens-adjustment motor 44 is an example of the movement unit described in the claims.

The coupler 25 is an example of the coupling unit described in the claims.

The rotator 28 is an example of the rotating unit described in the claim.

The sound detector 48 is an example of the sound detection unit described in the claim.

The confirmation camera 51 is an example of the camera described in the claim.

The connector 22 is an example of the connecting unit described in the claims.

The remote operation controller 57 is an example of the remote operation unit described in the claim.

The water flow pump 16 is an example of the jet flow unit described in the claim.

Note that the above-described correspondences between terms of embodiments and claims are just some of possible interpretations for reference and should not be construed as limiting the present invention.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A laser peening apparatus comprising:
an output unit configured to output laser light;
a light-guide unit configured to guide the laser light outputted from the output unit;
a condenser lens configured to condense the laser light guided by the light-guide unit;
an irradiation nozzle configured to radiate the laser light condensed by the condenser lens;
a focus-change unit configured to change a focal position of the laser light based on distance from an irradiation target of the laser light to the irradiation nozzle; and
a control unit configured to apply laser peening by radiating the laser light toward the irradiation target which is in contact with water.

2. The laser peening apparatus according to claim 1, further comprising:
a measurement unit configured to measure the distance from the irradiation target to the irradiation nozzle; and
a movement unit configured to move the condenser lens based on the distance measured by the measurement unit.

3. The laser peening apparatus according to claim 1, wherein the light-guide unit is configured as a tubular structure which guides the laser light in a state of parallel light.

4. The laser peening apparatus according to claim 1, further comprising a coupling unit and a rotating unit,
wherein the irradiation target includes a tubular structure which is fixed to a furnace bottom of a reactor pressure vessel on one end and upwardly extends from the furnace bottom in a vertical direction;
the coupling unit is configured to be connected with an upper part of the irradiation target and function as a shaft of rotation performed by the rotating unit; and
the rotating unit is configured to rotate the irradiation nozzle about the coupling unit.

5. The laser peening apparatus according to claim 1, further comprising:
a sound detection unit configured to detect a sound wave generated from an irradiation region of the laser light when the irradiation target disposed under water is irradiated with the laser light; and
a measurement unit configured to measure the distance from the irradiation target to the irradiation nozzle based on the sound wave detected by the sound detection unit.

6. The laser peening apparatus according to claim 1, further comprising a camera configured to image the irradiation target.

7. The laser peening apparatus according to claim 1, further comprising a connecting unit configured to be connected to an operation pole which extends from a working bridge provided over a reactor pressure vessel to a furnace bottom of the reactor pressure vessel,
wherein the control unit is configured to radiate the laser light toward the irradiation target which is provided on the furnace bottom.

8. The laser peening apparatus according to claim 7, further comprising a remote operation unit configured to remotely control connection between the connecting unit and the operation pole or separation of the operation pole from the connecting unit.

9. The laser peening apparatus according to claim 1, further comprising:
a coupling unit configured to be coupled to an upper part of the irradiation target, which is configured as a tubular structure fixed to a furnace bottom of a reactor vessel on one end and upwardly extends from the furnace bottom in a vertical direction; and
an inclinometer configured to measure an inclination of the laser peening apparatus under a state where the coupling unit is coupled to the irradiation target.

10. The laser peening apparatus according to claim 1, further comprising a jet flow unit configured to jet water from the irradiation nozzle toward the irradiation target.

11. A laser peening method comprising:
outputting laser light;
guiding the outputted laser light;
condensing the guided laser light;
radiating the condensed laser light from an irradiation nozzle;
changing a focal position of the laser light based on distance from an irradiation target of the laser light to the irradiation nozzle; and
applying laser peening by radiating the laser light toward the irradiation target which is in contact with water.

12. The laser peening method according to claim 11, further comprising:
installing one laser peening apparatus on the irradiation target by connecting an operation pole with the one laser peening apparatus;
causing the one laser peening apparatus to apply laser peening by separating the operation pole from the one laser peening apparatus;
installing another laser peening apparatus on another irradiation target by connecting the operation pole with the another laser peening apparatus; and
causing the another laser peening apparatus to apply laser peening by separating the operation pole from the another laser peening apparatus.
